# FASCICULE DE BREVET EUROPEEN

(11) **EP 1 201 524 B1**
(45) Date de publication et mention de la délivrance du brevet: **28.11.2007**
(21) Numéro de dépôt: 01402567.0
(22) Date de dépôt: 04.10.2001
(51) Int. Cl.: B60T 13/575

(54) **Amplificateur de force de freinage**
Bremskraftverstärker
Brake force booster

(30) Priorité: 25.10.2000 FR 0013697
(43) Date de publication de la demande: 02.05.2002
(73) Titulaire: Delphi Technologies, Inc., Troy, MI 48098 (US)
(72) Inventeur: Castel, Philippe, 75005 Paris (FR); Degorce, Frédéric, 91220 Bretigny sur Orge (FR)
(74) Mandataire: Jacobson, Claude

(56) Documents cités:
- DE-A- 3 939 499
- DE-A- 4 020 904
- GB-A- 2 058 261
- US-A- 5 699 713

## Description

La présente invention concerne les systèmes de freinage pour véhicules routiers et se rapporte plus particulièrement à un amplificateur de force de freinage, à dépression.

Les systèmes de freinage comportent généralement un maître-cylindre destiné, lors de l'actionnement d'une pédale de frein, à soumettre le fluide de freinage à une pression accrue qui est transmise, par l'intermédiaire de conduits appropriés, jusqu'aux freins du véhicule de manière à les actionner. Entre le maître-cylindre et la pédale de frein, est interposé un amplificateur de force de freinage, apte à multiplier la force appliquée par un conducteur sur cette pédale de frein.

Un amplificateur de force de freinage à dépression comporte, de manière connue, une enceinte, une membrane séparant l'enceinte en une chambre avant qui est équipée de moyens de raccordement à une source de dépression et en une chambre arrière.

Un disque de réaction est interposé entre, d'un côté, un ensemble de poussée destiné à transmettre en sortie la force amplifiée et, de l'autre côté, un plongeur et un piston, mobile dans l'enceinte. Le piston mobile communique la force additionnelle générée par la différence de pression entre la chambre avant et la chambre arrière. Sous les actions conjuguées du disque de réaction et d'un organe relié à la pédale du frein et recevant la force d'entrée, le plongeur se déplace axialement dans le piston entre des positions commandant l'évolution du freinage. Le document DE-A-3939499 divulgue le préambule de la revendication 1.

Dans de nombreuses applications, on souhaite qu'en tout début d'actionnement de la pédale de frein, immédiatement après avoir compensé les différents jeux éventuels et les forces élastiques de rappel du mécanisme en position stable de repos, l'amplificateur de freinage produise, en sortie, une force conséquente, bien supérieure à celle appliquée en entrée par le conducteur. On s'assure ainsi qu'en réponse à une sollicitation initiale de la pédale de frein par le conducteur, les freins réagiront quasiment immédiatement, étant entendu que plusieurs bars de pression sont souvent nécessaires pour les faire passer en position de freinage.

Actuellement, ce résultat, désigné ici par saut initial de freinage, est obtenu en prévoyant un jeu réglable séparant, dans la position de stabilisation du freinage, le disque de réaction du plongeur, ce jeu étant destiné à être occupé par une partie du matériau du disque de réaction se déformant lors du début du freinage.

La procédure de réglage de ce saut initial de freinage est longue et compliquée de par le nombre d'étapes qu'elle comporte.

Par ailleurs, des particules viennent gêner le mouvement coulissant du plongeur, ces particules, originaires du disque de réaction, résultant notamment des frottement occasionnés par la déformation de ce disque de réaction venant remplir, lors du freinage, le jeu précédemment mentionné.

L'invention vise à pallier ces inconvénients.

A cet effet, l'invention a pour objet un amplificateur de force de freinage comportant un piston actionné par une pression différentielle entre deux chambres, un plongeur monté axialement déplaçable dans ce piston entre des positions commandant l'évolution de cette pression différentielle par l'intermédiaire de moyens de commutation, un ensemble de poussée relié au maître-cylindre des freins correspondants, et un disque de réaction interposé entre le piston et le plongeur d'une part, et l'ensemble de poussée d'autre part, le plongeur se déplaçant axialement sous les actions conjuguées de la commande d'une pédale de frein et du disque de réaction, caractérisé en ce que, dans la région de jonction entre l'ensemble de poussée et le disque de réaction, est ménagée au moins une cavité d'absorption des déformations du disque de réaction lors de sa compression entre le piston et l'ensemble de poussée.

Selon d'autres caractéristiques de cet amplificateur de force de freinage :
- ladite cavité est centrée sur l'axe du plongeur ;
- ladite cavité est formée au moins en partie par la passage central d'une rondelle annulaire interposée entre un poussoir de l'ensemble de poussée et le disque de réaction ;
- ladite cavité est formée au moins en partie par un creux ménagé dans la tête d'un poussoir de l'ensemble de poussée ;
- une cale d'épaisseur est disposée dans ledit creux ;
- ladite cavité est formée au moins en partie par un creux ménagé dans le disque de réaction ;
- le plongeur étant dans la position de stabilisation du freinage et en l'absence de freinage, un jeu définissant une cavité complémentaire d'absorption de la déformation du disque de réaction sépare le plongeur du disque de réaction;
- la surface de l'ensemble de poussée, qui coopère avec le disque de réaction lors du freinage, présente des arêtes qui sont toutes arrondies.

L'invention sera mieux comprise à la lecture de la description qui va suivre, donnée uniquement à titre d'exemple et faite en se référant aux dessins annexés, sur lesquels
- la Fig.1 est une vue schématique en coupe longitudinale d'un amplificateur de force de freinage, selon l'art antérieur ;
- la Fig.2 est un graphe illustrant la force produite en sortie de l'amplificateur de la figure 1 en fonction de la force appliquée en entrée en appuyant par exemple sur la pédale de frein ;
- la Fig.3 est une vue schématique, en coupe longitudinale, de la partie centrale, comportant le piston mobile, d'un amplificateur de force de freinage conforme à l'invention ; et
- la Fig.4 est une vue analogue à celle de la figure 3 illustrant une variante de réalisation de l'invention.

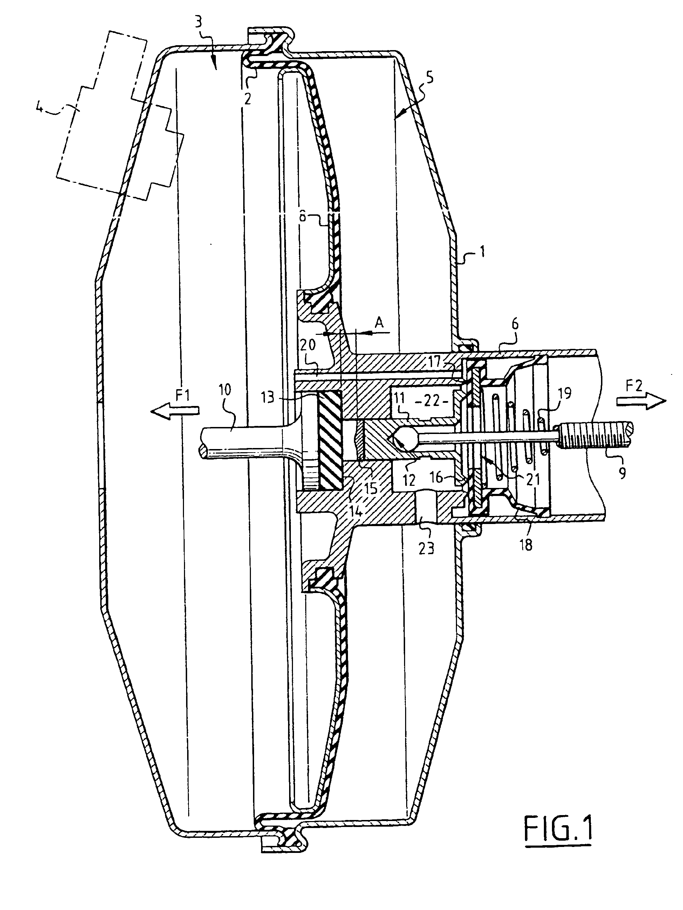

Sur la figure 1, on a représenté schématiquement, en coupe longitudinale, un amplificateur de force de freinage, à dépression, selon l'état de la technique.

Il comprend un boîtier ou enceinte close 1, dans lequel est disposée une membrane 2 délimitant une chambre avant 3 équipée de moyens 4 de raccordement à une source de dépression (non représentée) et une chambre arrière 5 dans laquelle règne une pression variable. La partie centrale de la membrane 2 est montée sur un piston 6 axialement coulissant dans l'enceinte 1 selon une direction sensiblement perpendiculaire au plan général de séparation de cette enceinte 1 par ladite membrane 2. Un support de membrane 8 présentant la forme générale d'une coupelle est fixé rigidement au piston 6, et s'étend radialement à partir de celui-ci.

Les deux extrémités du piston 6 reçoivent chacune un organe communiquant l'un la force d'entrée, l'autre celle de sortie, à savoir une tige de commande 9 disposée du côté de la chambre arrière 5 et reliée à la pédale de frein, et un poussoir 10 disposé du côté de la chambre avant 3 et relié quant à lui au maître-cylindre, respectivement. Un plongeur 11, monté axialement coulissant à l'intérieur du piston 6, est relié au moyen d'un appui rotulant 12 à la tige de commande 9 qui est ainsi apte à actionner ce plongeur 11. Un disque de réaction 13, réalisé en un matériau sensiblement incompressible et déformable, par exemple en caoutchouc dense, est interposé entre, d'un côté, le poussoir 10 et, de l'autre côté, le plongeur 11 et une surface annulaire 14 du piston 6 dont un orifice central reçoit le plongeur 11 à coulissement.

La surface d'extrémité du plongeur 11 qui est destinée à s'appliquer sur le disque de réaction 13 est munie d'une cale d'épaisseur 15.

L'extrémité du plongeur 11, opposée à la cale d'épaisseur 15, est pourvue d'un siège 16 présentant la forme d'une nervure annulaire. Un autre siège 17, également formé par une nervure annulaire qui s'étend autour du plongeur 11, à distance de lui, est porté par le piston 6. Les sièges 16 et 17 sont tous deux tournés vers un clapet mobile 18 de manière à pouvoir coopérer avec lui soit alternativement, soit simultanément.

A cet effet, ce clapet mobile 18 est repoussé par un ressort 19 en direction des sièges 16 et 17. Un premier passage 20 ménagé dans le piston 6 et un deuxième passage 21 traversant le clapet 18 sont aptes à mettre en communication, par l'intermédiaire d'une chambre 22 et d'un passage 23, formés tous deux dans le piston 6, la chambre arrière 5 avec respectivement soit la chambre avant 3 en dépression, soit l'atmosphère ambiante, selon la position relative des sièges 16 et 17 et du clapet mobile 18.

En position de repos ou d'absence de freinage, la tige de commande 9, non sollicitée par la pédale de frein, est en position reculée, c'est-à-dire dans une position décalée dans le sens de la flèche F2 par rapport à celle dans laquelle elle se trouve sur la figure 1. Elle est accompagnée, dans cette position reculée d'absence de freinage, par le plongeur 11. Le siège annulaire 16 est alors appliqué contre le clapet mobile 18 si bien que d'une part la chambre arrière 5 est isolée de l'atmosphère ambiante, et d'autre part, le clapet mobile 18 est éloigné du siège annulaire 17, les chambres avant 3 et arrière 5 étant dès lors mises en communication par l'intermédiaire des passages 20 et 23 et de la chambre 22. Ces chambres avant 3 et arrière 5 sont alors à pression identique, et aucune poussée n'est générée sur le poussoir 10.

Lorsque l'on se met à exercer un effort sur la pédale de frein, la tige de commande 9 et le plongeur 11 se déplacent dans la direction représentée par la flèche F1, c'est-à-dire en direction de la chambre avant 3, et passent par la position désignée par position de stabilisation du freinage, dans laquelle les sièges annulaires 16 et 17 s'appliquent tous deux contre le clapet mobile 18. Dans cette position de stabilisation du freinage, représentée à la figure 1, un jeu A sépare le plongeur 11 du disque de réaction 13. Le plongeur 11 peut donc poursuivre sa course dans le sens de la flèche F1 et passe ainsi dans une position d'intensification de la force de freinage, dans laquelle les sièges annulaires 16 et 17 sont respectivement l'un éloigné du clapet mobile 18 et l'autre appliqué de manière étanche contre lui, isolant ainsi la chambre avant 3 de la chambre arrière 5 et mettant cette dernière en communication avec l'air ambiant par l'intermédiaire des passages 21 et 23 et de la chambre 22.

L'amplificateur de force de freinage est entré dans une brève phase transitoire désignée ici par saut de freinage initial. La pression à l'intérieur de la chambre arrière 5, mise en communication avec l'air ambiant, augmente rapidement.

Du fait de la différence de pression qui règne entre la chambre arrière 5 et la chambre avant 3, la membrane 2 s'applique sur le support de membrane 8 qui transmet la poussée ainsi reçue, orientée selon la flèche F1, au piston 6.

Cette poussée est communiquée au poussoir 10 par le disque de réaction 13 comprimé par la surface annulaire 14. Au fur et à mesure que cette force de poussée augmente par arrivée d'air ambiant dans la chambre arrière 5, le disque de réaction 13 comprimé entre la surface annulaire 14 et le poussoir 10 se déforme et vient occuper le volume correspondant au jeu A.

Le disque de réaction 13, en contact avec le plongeur 11, repousse en arrière celui-ci en exerçant une force croissante dans le sens de la flèche F2, jusqu'à une position d'équilibre dans laquelle les deux sièges 16 et 17 sont en contact avec le clapet mobile 18, faisant sortir l'amplificateur de force de freinage de la phase transitoire qui vient d'être décrite.

Une fois passée, cette phase transitoire correspondant au saut initial de freinage, le freinage peut être soit stabilisé, soit intensifié, soit au contraire diminué par simple action sur le plongeur, selon un fonctionnement connu qui ne sera pas repris ici.

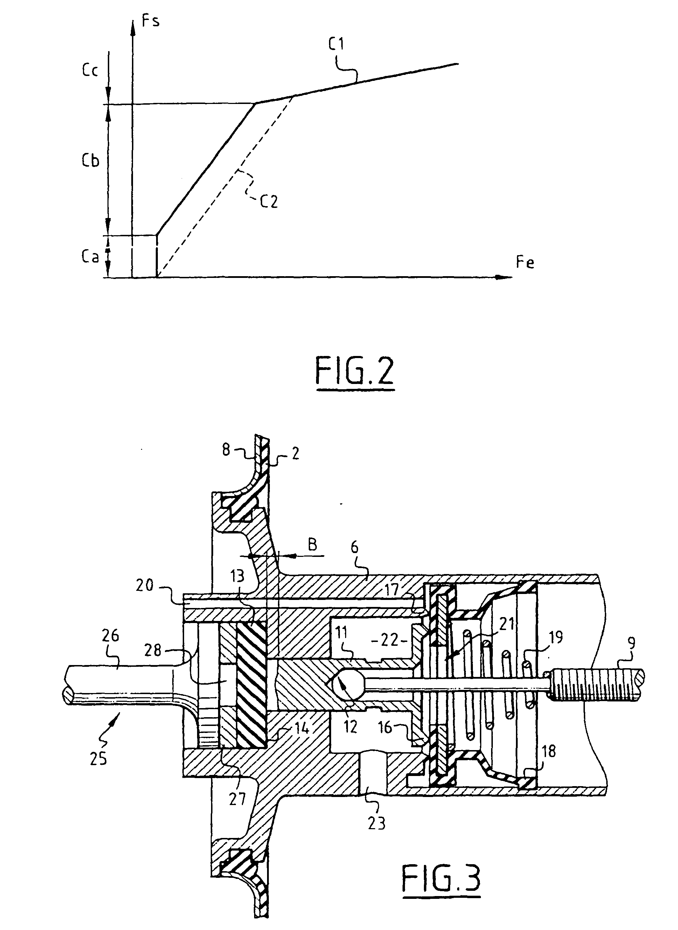

Un tel amplificateur de force de freinage produit une force de sortie qui est une fonction de la force d'entrée. La relation qui lie ces deux grandeurs est représentée par la courbe en gras C1 tracée sur le graphe de la figure 2. Cette courbe C1 ne présente qu'un caractère illustratif, les proportions relatives des portions qui la composent ayant été arbitrairement choisies, tout comme leur inclinaison, dans un souci de clarté uniquement.

La partie de la courbe C1 repérée par la référence Ca correspond au saut initial de freinage précédemment mentionné. Passé cette première portion Ca, on se déplace sur la portion Cb de la courbe C1, qui représente des positions successives de stabilisation de la force de freinage, en passant par des positions transitoires d'intensification et de diminution de la force de freinage.

Lorsque la chambre arrière 5 de l'amplificateur est parvenue à la pression atmosphérique, la force de sortie s'accroît ou diminue d'une quantité sensiblement égale à la force d'entrée, ce qui est représenté par la portion Cc de la courbe C1. La courbe C2 est celle qui serait obtenue dans le cas où l'amplificateur de force de freinage étant dépourvu du jeu A, aucun saut initial de freinage n'aurait lieu.

Pour régler l'ampleur du saut initial de freinage, on commence par mesurer celui-ci tandis que l'amplificateur de force de freinage est, au moins en grande partie, assemblé. Puis, dès lors que cette mesure révèle un écart trop important avec la valeur visée, on retire successivement le poussoir 10 et le disque de réception 13, afin d'avoir accès à la cale d'épaisseur 15 fixée à l'extrémité du plongeur 11.

Cette cale d'épaisseur 15 est démontée et remplacée par une autre d'une épaisseur différente, déterminée à partir de la mesure initiale. Ensuite, le disque de réaction est replacé en position ainsi que le poussoir 10, et une nouvelle mesure est effectuée. La procédure qui vient d'être décrite apparaît longue et compliquée de par le nombre d'étapes qu'elle comporte.

Par ailleurs, des particules en caoutchouc se détachent du disque de réaction 13 du fait notamment des frottements causés par la pénétration de celui-ci dans le jeu A. Ces particules, en particulier celles qui s'accumulent dans la portion intermédiaire du piston 6, située entre le disque de réaction 13 et la chambre 22 et servant à guider le plongeur 11 dans son mouvement coulissant, perturbent et freinent ce mouvement. Elles gênent également le fonctionnement des sièges 16 et 17 dans leur coopération avec le clapet mobile 18. Leur nombre est évidemment d'autant plus élevé que le jeu A est important, donc le saut élevé.

Sur la figure 3 est représentée la partie centrale, agrandie, d'un amplificateur de force de freinage conforme à l'invention.

Cette partie centrale qui comporte notamment le piston 6 et les éléments qui coopèrent avec lui, est destinée à être logée dans une enceinte 1 (non représentée sur cette figure) selon une disposition identique ou similaire à celle illustrée sur la figure 1 et précédemment commentée. L'amplificateur de force de freinage ainsi formé comporte à la place du poussoir 10, un ensemble de poussée 25 composé d'un poussoir 26 et d'une rondelle 27 disposée entre ce dernier et le disque de réaction 13.

Le passage qui traverse axialement la rondelle 27 de part en part délimite avec le poussoir 26 et le disque de réaction 13, une cavité 28 située, par rapport au disque de réaction 13, du côté opposé à celui du plongeur 11 et dans l'axe de ce dernier, qui, avantageusement, ne porte plus de cale d'épaisseur 15.

Dans son ensemble, le fonctionnement de l'amplificateur de freinage ainsi obtenu est le suivant. Le saut initial de freinage est obtenu du fait du remplissage de la cavité 28, par le caoutchouc du disque de réaction 13 se déformant. Le jeu A de l'amplificateur connu est supprimé.

En variante, il peut tout de même subsister sous la forme d'un jeu B réduit en conséquence. Dans ce cas, le saut initial de freinage résulte des deux contributions : volume du au jeu B d'un côté, volume de la cavité 28 de l'autre.

La procédure permettant le réglage de l'ampleur de ce saut initial de freinage est notablement simplifiée par rapport à celle mise en oeuvre pour l'amplificateur de freinage de la figure 1. En effet, celui-ci s'effectue en changeant, si cela est souhaitable, la rondelle 27 qui définit le volume de la cavité 28, seul le poussoir 26 étant alors démonté.

Dans le but de faire varier ce volume de la cavité 28, on joue avantageusement sur l'épaisseur de la rondelle 27. Il est également envisageable de joueur sur le diamètre du trou qui la traverse de part en part. Ce deuxième mode de réglage présente l'avantage d'éviter un décalage axial du poussoir 26, qui, si l'on ne veut qu'il se répercute sur la chaîne de transmission aval, doit être compensé.

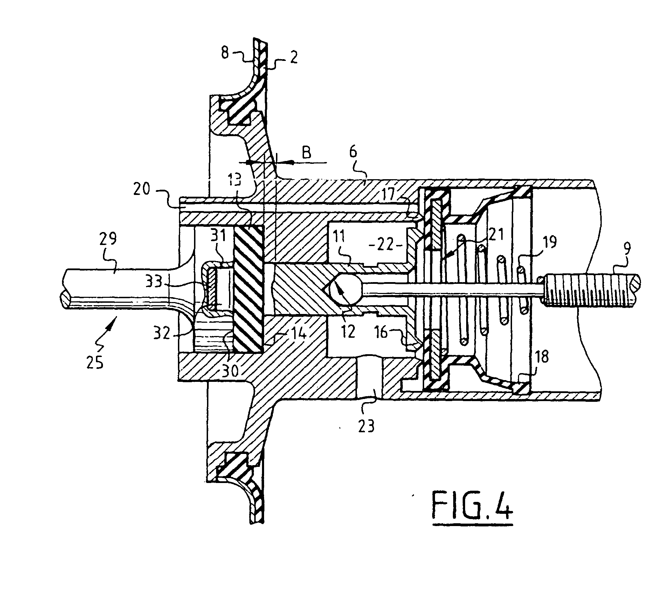

La figure 4, analogue à la figure 3, illustre une variante de réalisation de l'invention dans laquelle le piston 26 et la rondelle 27 ont été remplacés par un piston 29 en une seule pièce. Ce piston 29 est représentée en vue partiellement arrachée de manière à montrer qu'il présente une surface périphérique plane 30 en contact avec le disque de réaction 13 et, au centre de celle-ci, une surface centrale en creux 31, dans le fond de laquelle est placée si nécessaire une cale d'épaisseur 33. Le disque de réaction 13, la surface en creux 31 et la cale 33 délimitent conjointement une cavité 32.

Avantageusement, la surface qui, lors du freinage, coopère côté poussoir avec le disque de réaction, ne présente aucune arête vive. Les frictions, qui dégradent le caoutchouc du disque de réaction 13 lorsque celui-ci pénètre dans la cavité 32, et qui participent à la formation de particules libres, sont de ce fait réduites. La disposition de la cavité 32 est sensiblement identique à celle de la cavité 28 de l'agencement illustré à la figure 3.

Le fonctionnement de cette variante de réalisation de l'invention est identique à celui précédemment décrit de l'amplificateur de force de freinage dont la partie centrale est illustrée à la figure 3.

Le réglage du saut de freinage initial s'effectue en changeant la cale 33. En l'absence de celle-ci, il peut être également réalisé soit en changeant le poussoir 29, soit en interposant entre celui-ci et le disque de réaction, une rondelle de faible épaisseur percée en son milieu.

En variante, la cavité 28 ou 32 peut être obtenue, au moins en partie, en formant un creux au milieu de la surface du disque de réaction 13 destinée à coopérer avec l'ensemble de poussée 25.

Bien entendu, la surface en creux 31 ou celle obtenue en accolant la rondelle 27 contre le poussoir 26 peut présenter des formes variées, autres que celles qui ont été présentées jusqu'ici. Par exemple, leur paroi latérale peut présenter la forme d'un tronc de cône s'évasant en direction du disque en réaction 13.

Grâce à l'invention, le nombre de particules émises côté plongeur, provenant du disque de réaction, est diminué. En effet, dans le cas où le jeu A côté plongeur est totalement supprimé, le disque de réaction 13 ne se déforme plus côté plongeur. Dans le cas où le jeu A est seulement réduit sous la forme d'un jeu B, la déformation du disque de réaction pour occuper ce jeu B, ainsi que les frottements qu'elle occasionne, sont réduits en conséquence.

Les particules qui apparaissent du fait de la déformation du disque de réaction dans la cavité 28 ou 32 située côté poussoir, et dont le nombre peut déjà être réduit par la forme particulière donnée à cette cavité 28 ou 32, sont séparées du plongeur par le disque de réaction et ne peuvent pas en perturber le mouvement.

En présence du seul jeu A, l'amplificateur connu, côté plongeur, le disque de réaction se déforme de manière importante et présente de ce fait, après un certain temps d'exploitation, une déformation résiduelle permanente qui nuit à ses performances. En employant, suivant l'invention, à la fois un jeu B et une cavité 28 ou 32, situés chacun d'un côté du disque de réaction, sensiblement en vis-à-vis, ce phénomène est réduit, puisque la déformation du disque de réaction est répartie entre eux. Ceci constitue encore un avantage de l'invention.

Il en résulte particulièrement une moindre dérive du rapport d'amplification de l'amplificateur de freinage au fur et à mesure du vieillissement de l'appareil.

## Revendications

1. Amplificateur de force de freinage comportant :
- un piston (6) actionné par une pression différentielle entre deux chambres (3, 5),
- un plongeur (11) monté axialement déplaçable dans ce piston (6) entre des positions commandant l'évolution de cette pression différentielle par l'intermédiaire de moyens de commutation (16, 17, 18),
- un ensemble de poussée (26, 27; 29) relié au maître-cylindre des freins correspondants, et
- un disque de réaction (13) interposé entre le piston (6) et le plongeur (11) d'une part, et l'ensemble de poussée (26, 27; 29) d'autre part, le plongeur (11) se déplaçant axialement sous les actions conjuguées de la commande (9) d'une pédale de frein et du disque de réaction (13),
- au moins une cavité (28; 32) d'absorption des déformations du disque de réaction (13) lors de sa compression entre le piston (6) et l'ensemble de poussée (26, 27; 29), ladite cavité étant ménagée dans la région de jonction entre l'ensemble de poussée (26, 27; 29) et le disque de réaction (13),
**caractérisé en ce que** ladite cavité (28) est formée au moins en partie par le passage central d'une rondelle annulaire (27) interposée entre un poussoir (26) de l'ensemble de poussée et le disque de réaction (13).

2. Amplificateur de force de freinage selon la revendication 1, **caractérisé en ce que** ladite cavité (28; 32) est centrée sur l'axe du plongeur (11).

3. Amplificateur de force de freinage selon l'une quelconque des revendications précédentes, **caractérisé en ce que** ladite cavité (32) est formée au moins en partie par un creux (31) ménagé dans la tête d'un poussoir (29) de l'ensemble de poussée.

4. Amplificateur de force de freinage selon la revendication 3, **caractérisé en ce qu'**une cale d'épaisseur (33) est disposée dans ledit creux (31).

5. Amplificateur de force de freinage selon l'une quelconque des revendications précédente, **caractérisé en ce que** ladite cavité est formée au moins en partie par un creux ménagé dans le disque de réaction (13).

6. Amplificateur de force de freinage selon l'une quelconque des revendications précédentes, **caractérisé en ce que** le plongeur (11) étant dans la position de stabilisation du freinage et en l'absence de freinage, un jeu (B) définissant une cavité complémentaire d'absorption de la déformation du disque de réaction sépare le plongeur (11) du disque de réaction (13).

7. Amplificateur de force de freinage selon l'une quelconque des revendications précédentes, **caractérisé en ce que** la surface de l'ensemble de poussée (26, 27; 29), qui coopère avec le disque de réaction (13) lors du freinage, présente des arêtes qui sont toutes arrondies.

## Claims

1. Brake force booster comprising:
- a piston (6) actuated by a differential pressure between two chambers (3, 5),
- a ram (11) mounted to be axially displaceable in this piston (6) between positions controlling the development of this differential pressure through switching means (16, 17, 18),
- a thrust assembly (26, 27; 29) connected to the master-cylinder of the corresponding brakes, and
- a reaction disc (13) interposed between the piston (6) and the ram (11) on the one hand and the thrust assembly (26, 27; 29) on the other hand, the ram (11) moving axially under the combined action of the control (9) of a brake pedal and the reaction disc (13),
- at least one cavity (28; 32) for absorbing the deformations of the reaction disc (13) while it is compressed between the piston (6) and the thrust assembly (26, 27; 29), said cavity being formed in the junction zone between the thrust assembly (26, 27; 29) and the reaction disc (13),
**characterised in that** the cavity (28) is formed at least partly by the central passage of an annular washer (27) interposed between a push-rod (26) of the thrust assembly and the reaction disc (13).

2. Brake force booster according to claim 1, **characterised in that** the cavity (28; 32) is centred on the axis of the ram (11).

3. Brake force booster according to any one of the preceding claims, **characterised in that** the cavity (32) is formed at least partly by a recess (31) provided in the head of a push-rod (29) of the thrust assembly.

4. Brake force booster according to claim 3, **characterised in that** a shim (33) is disposed in said recess (31).

5. Brake force booster according to any one of the preceding claims, **characterised in that** said cavity is formed at least partly by a recess provided in the reaction disc (13).

6. Brake force booster according to any one of the preceding claims, **characterised in that**, with the ram (11) in the braking stabilising position and in the absence of braking, a clearance (B) defining a complementary cavity for absorbing the deformation of the reaction disc separates the ram (11) from the reaction disc (13).

7. Brake force booster according to any one of the preceding claims, **characterised in that** the surface of the thrust assembly (26, 27; 29), which cooperates with the reaction disc (13) during braking, has ridges which are all rounded.

## Patentansprüche

1. Bremskraftverstärker, enthaltend:
- einen Kolben (6), der von einem Differenzdruck zwischen zwei Kammern (3, 5) betätigt wird,
- ein Stößel (11), der in diesem Kolben (6) in axialer Richtung zwischen Positionen verschiebbar montiert ist, welche die Veränderung des Differenzdrucks mit Hilfe von Umschaltmitteln (16, 17, 18) steuern,
- eine Schubeinheit (26, 27; 29), die mit dem Hauptzylinder der entsprechenden Bremsen verbunden ist, und
- eine Reaktionsscheibe (13), die zwischen dem Kolben (6) und dem Stößel (11) einerseits und der Schubeinheit (26, 27; 29) andererseits eingefügt ist, wobei sich der Stößel (11) unter der gemeinsamen Einwirkung der Betätigung (9) eines Bremspedals und der Reaktionsscheibe (13) in axialer Richtung verschiebt,
- zumindest einen Hohlraum (28; 32) zur Absorption der Verformungen der Reaktionsscheibe (13), wenn diese zwischen dem Kolben (6) und der Schubeinheit (26, 27; 29) zusammengedrückt wird, wobei der Hohlraum in einem Verbindungsbereich zwischen der Schubeinheit (26, 27; 29) und der Reaktionsscheibe (13) vorgesehen ist,
**dadurch gekennzeichnet, dass** der Hohlraum (28) zumindest teilweise von dem mittigen Durchlass einer ringförmigen Scheibe (27) gebildet ist, die zwischen einem Schubelement (26) der Schubeinheit und der Reaktionsscheibe (13) eingefügt ist.

2. Bremskraftverstärker nach Anspruch 1, **dadurch gekennzeichnet, dass** der Hohlraum (28; 32) auf der Achse des Stößels (11) zentriert ist.

3. Bremskraftverstärker nach einem der vorangegangenen Ansprüche, **dadurch gekennzeichnet, dass** der Hohlraum (32) zumindest teilweise von einer Vertiefung (31) gebildet ist, die in dem Kopf eines Schubelements (29) der Schubeinheit vorgesehen ist.

4. Bremskraftverstärker nach Anspruch 3, **dadurch gekennzeichnet, dass** eine Ausgleichsscheibe (33) in der Vertiefung (31) angeordnet ist.

5. Bremskraftverstärker nach einem der vorangegangenen Ansprüche, **dadurch gekennzeichnet, dass** der Hohlraum zumindest teilweise von einer Vertiefung gebildet ist, die in der Reaktionsscheibe (13) vorgesehen ist.

6. Bremskraftverstärker nach einem der vorangegangenen Ansprüche, **dadurch gekennzeichnet, dass** wenn sich der Stößel (11) in der Bremsstabilisierungsposition befindet und keine Bremsung anliegt, ein Spiel (B), das einen komplementären Hohlraum für die Absorption der Verformung der Reaktionsscheibe bildet, den Stößel (11) von der Reaktionsscheibe (13) trennt.

7. Bremskraftverstärker nach einem der vorangegangenen Ansprüche, **dadurch gekennzeichnet, dass** die Oberfläche der Schubeinheit (26, 27; 29), die beim Bremsen mit der Reaktionsscheibe (13) zusammenwirkt, Kanten aufweist, die allesamt abrundet sind.
